# FASCICULE DE BREVET EUROPEEN

(11) **EP 2 819 821 B1**
(45) Date de publication et mention de la délivrance du brevet: **10.08.2016**
(21) Numéro de dépôt: 13705781.6
(22) Date de dépôt: 22.02.2013
(51) Int. Cl.: B29C 33/62

(54) **TRAITEMENT ANTI-ADHERENT DE MOULES COMPOSITES**
HAFTABWEISENDE BEHANDLUNG FÜR VERBUNDFORMEN
NONSTICK TREATMENT FOR COMPOSITE MOLDS

(30) Priorité: 29.02.2012 FR 1251869
(43) Date de publication de la demande: 07.01.2015
(73) Titulaire: Association pour les Transferts de Technologies du Mans, 72000 Le Mans (FR)
(72) Inventeur: NOBLAT, Roxane, F-72000 Le Mans (FR); LATOR, Bruno, F-29300 Quimperle (FR)
(74) Mandataire: Domenego, Bertrand
(86) Numéro de dépôt international: PCT/EP2013/053602
(87) Numéro de publication internationale: WO 2013/127708

(56) Documents cités:
- EP-A1- 2 130 659
- US-A- 4 737 211

## Description

La présente invention concerne un procédé de traitement de moules en matériau composite en vue de les rendre anti-adhérent afin de faciliter le démoulage, ainsi que les moules ainsi obtenus.

### [Etat de la technique]

La demande croissante de grandes pièces en matériau composite, notamment pour des applications aéronautiques, a contribué à l'essor d'outillages en matériau composite plus légers, au détriment d'outillages en métal. En particulier, l'utilisation de moules en matériau composite va tendre à se répandre.

De nombreuses technologies existent pour rendre les moules métalliques non adhérents afin de faciliter le démoulage de la pièce moulée.

Il est ainsi connu d'enduire les surfaces du moule avec un agent démoulant, par exemple un composé siliconé, comme par exemple décrit dans la demande de brevet FR 2846591. Ces enductions ne sont cependant pas très pérennes, ce qui a pour conséquence qu'il faut répéter le traitement à intervalles réguliers.

Il est également connu de rendre les surfaces de moules non adhérentes par enduction avec du polytetrafluoroéthylène (PTFE). Une telle enduction peut être obtenue par dépôt de PTFE sous forme de poudre suivie d'un traitement thermique à une température suffisante pour permettre la coalescence de particules de poudre en un film continu. Pour le PTFE cette température de formation de film est d'environ de 360°C. Or la plupart des moules composites ne résistent pas à une température supérieure à 300°C.

EP2130659 décrit un procédé pour rendre anti-adhérent un moule en Ni, Al, verre, quartz, silicium, polyimide ou polycarbonate et destiné à la fabrication de lentilles optiques, comprenant: l'application d'une poudre de polymère fluoré, par exemple FEP, présentant une température minimale de filmification inférieure à 300°C et une tenue en température supérieure à 200°C, sur les parois du moule afin de former une couche; et le chauffage de la couche à une température comprise entre 260°C et 300°C afin de former un film continu.

### [Résumé de l'invention]

Le but de l'invention est alors de proposer un procédé pour améliorer la facilité de démoulage de moules composites à base de résines telles que des résines d'epoxyde qui puisse être réalisé à une température compatible avec leur résistance thermique.

Un autre but encore est de proposer de tels moules munis d'un revêtement anti-adhérent durable.

Les buts évoqués ci-dessus sont atteints selon l'invention en déposant sur la surface des moules composite un film mince de polymère fluoré, notamment de copolymère de fluoroéthylène et de fluoropropylène (FEP) à titre d'agent de démoulage.

En effet, il s'est avéré qu'il est possible de former un film de ce polymère à une température compatible avec les moules composites, du fait de sa température de formation de film d'environ 260°C.

Avantageusement, ce polymère est en outre non toxique, inerte vis-à-vis du moule, s'adapte à des moules de géométrie complexe et est compatible avec la plupart des résines utilisées dans les matériaux composites.

Aussi, selon un premier aspect, l'invention vise un procédé pour rendre un moule en matériau composite anti-adhérent, comprenant les étapes de :
(i) fourniture d'un moule en matériau composite comprenant une résine époxyde;
(ii) application d'une poudre de polymère fluoré présentant une température minimale de filmification inférieure à 300 °C et une tenue en température supérieure à 200°C, sur les parois du moule afin de former une couche; et
(iii) chauffage de la couche obtenue à une température comprise entre 260°C et 300°C afin de former un film continu,

ce par quoi on obtient un moule en matériau composite dont les parois sont munies d'un revêtement anti-adhérent.

De préférence, le moule en matériau composite comprend des fibres de carbone.

Selon un mode de réalisation préféré, le polymère fluoré est un polymère ou copolymère de fluoroalkylène, notamment de fluoroéthylène. Parmi ces polymères, le copolymère de fluoroéthylène et de propylène s'est révélé particulièrement intéressant. Tout particulièrement préféré est un copolymère de perfluoroéthylène et perfluoropropylène (FEP).

Le polymère fluoré, sous forme de poudre, peut être appliqué sous forme de dispersion, notamment de dispersion aqueuse.

Selon un mode de réalisation de l'invention, l'étape (iii) est réalisée dans une étuve. En alternative, l'étape (iii) peut être réalisée au moyen de rayonnement infra-rouge.

De préférence, le revêtement obtenu à partir de la couche de polymère fluoré a une épaisseur comprise entre 10 et 100µm.

Selon un second aspect, l'invention vise un moule en matériau composite susceptible d'être obtenu par le procédé selon l'invention, notamment destiné à la fabrication de pièces en matériau composite.

### [Définitions]

Dans le cadre du présent exposé, on entend par le terme « copolymère » désigner un polymère issu de la copolymérisation d'au moins deux types de monomères, chimiquement différents. Il est donc formé d'au moins deux motifs de répétition. Les motifs peuvent être présents dans le copolymère avec un enchaînement aléatoire, alterné, statistique ou séquencé. Les trois premiers enchaînements conduisent à un copolymère homogène, alors qu'il existe des copolymères séquencés, qui peuvent être à blocs ou à greffons, hétérogènes. Les copolymères hétérogènes sont caractérisés par une microstructure présentant plusieurs phases et températures de transition vitreuse Tg.

On entend par le terme « matériau composite » désigner un matériau résultant de l'assemblage d'au moins deux matériaux non miscibles mais ayant une certaine affinité. Le nouveau matériau ainsi constitué possède des propriétés que les éléments seuls ne possèdent pas. Le plus souvent, le matériau composite comporte une matrice, formé par une phase continue, et un renfort, formant une phase discontinue dans la matrice. La matrice peut être notamment une résine thermoplastique ou thermodurcissable. Elle assure la cohésion de la structure et la retransmission des efforts vers le renfort. Le renfort forme une ossature qui assure la tenue mécanique et la protection de la matrice. Le renfort peut se présenter notamment sous forme de fibres. Ces fibres peuvent être rassemblées en nappes de tissus continues appelés plis. Le matériau composite peut être constitué notamment par une superposition de 1 à 10 de tels plis au sein de la matrice.

On entend par le terme « fluoroalkylène » et plus spécifiquement « fluoroéthylène » et « fluoropropylène » de manière générale désigner l'éthylène dans lequel un, deux, trois ou quatre atomes d'hydrogène sont remplacés par un atome de fluor.

On entend par le terme « température minimale de filmification » (TMF) désigner la température à laquelle un matériau pulvérulent forme un film continu, par coalescence des gouttelettes formées par fusion des particules.

### [Description détaillée de l'invention]

Le procédé selon l'invention permet de préparer de manière rapide et simple des moules munis d'un revêtement anti-adhérent robuste et durable, même lorsque la résistance thermique des moules n'excède pas 300°C.

Le procédé est réalisé par le dépôt sur la surface du moule d'un polymère fluoré, notamment d'un copolymère de fluoroéthylène et de fluoropropylène (FEP), sous forme de poudre, suivi d'une étape de chauffage permettant de parfaire l'homogénéité et le caractère continu du film déposé.

Le moule en matériau composite est en matériau composite à matrice organique (CMO) comprenant une résine époxy (EP). D'autres résines telles que les résines polyesters insaturés (UP), les résines vinylester, les résines phénoliques (PF) et les résines polyimides thermodurcissables (PIRP), ou des thermoplastiques comme le polypropylène ou le polyamide ou comme le polyéther imide (PEI), le sulfure de polyphénylène (PPS) et la polyétheréthercétone (PEEK) peuvent être éventuellement présentes.

Les renforts présents dans le matériau composite peuvent en principe être quelconques. Ils sont généralement classés selon leur composition, leur forme (fibres courtes (0,1 - 1 mm), longues (1 - 50 mm) ou continues (> 50 mm)) et leur disposition (parallèle, en angle ou aléatoire, en mat ou tissé). Le matériau composite peut comporter un seul ou plusieurs renforts différents. Parmi les fibres, on peut citer les fibres de verre les fibres de carbone, les fibres d'aramide, les fibres de carbure de silicium et les fibres végétales, comme le chanvre ou le lin.

Les moules en matériau composite avec des renforts en fibres de carbone et une résine époxyde à titre de matrice sont particulièrement préférés.

Avantageusement, le procédé selon l'invention peut être réalisé avec des moules de forme et de dimension quelconques.

Le copolymère de fluoroéthylène et de fluoropropylène (FEP) utilisé à titre d'agent de démoulage est un copolymère de hexafluoropropylène et tetrafluoroethylène. Il est vendu notamment par Dupont sous la marque Teflon^{®} FEP, par Daikin sous le nom de Neoflon^{®} et par Dyneon/3M sous nom de Dyneon^{®} FEP.

De préférence, on utilise le copolymère déjà polymérisé. Ce copolymère est peu soluble, et est donc généralement proposé sous forme de dispersion dans un solvant ou dans l'eau. Il peut également toutefois se présenter sous forme de microparticules.

Pour des raisons pratiques, on choisira de préférence une dispersion aqueuse. De telles formulations de FEP sont disponibles dans le commerce, par exemple sous le nom de Xylan^{®} 80-650 vendu par Whitford France, Pontault-Combault ou Teflon^{®} FEP TE-9568 vendu par Dupont.

Généralement, il n'est pas nécessaire d'appliquer un primaire sur la surface. Toutefois, lorsque cela est souhaité, on peut appliquer un produit de type PRIMER 420-710 vendu par Dupont, qui est un mélange de résines synthétiques et de solvants contenant de la N-méthyl-2-pyrrolidone.

Le polymère fluoré, le plus souvent donc sous forme de dispersion, peut être appliqué sur les parois du moule à enduire par un moyen quelconque habituellement mis en oeuvre dans ce but, par exemple par trempage ou par pulvérisation, notamment au pistolet. L'application par pistolet est préférée car elle assure l'obtention aisée d'un film mince et homogène même pour des moules de géométrie complexe et ne requiert pas la mise à disposition d'un bain.

De préférence, on procède à une application de plusieurs couches, par exemple 2, 3 ou même 4 couches, afin d'assurer une couverture complète de la surface et de rendre le revêtement résistant et durable.

Chaque couche présente, à l'état sec, de préférence une épaisseur de 20 à 30 µm.

L'épaisseur finale du revêtement de polymère fluoré sec est avantageusement comprise entre 10 et 150, de préférence entre 20 et 130 µm. Du fait de sa faible épaisseur, le revêtement n'affecte généralement pas les cotes de la pièce à mouler.

Après séchage du revêtement, éventuellement sous ventilation, on procède au traitement thermique permettant la formation d'un film homogène et continu. Le traitement thermique est réalisé de manière à atteindre la température de formation de film du polymère fluoré, aussi appelée température minimale de filmification, qui pour le FEP est généralement comprise entre 260 °C et 300 °C. Le chauffage peut être réalisé par l'un des moyens connus à cet effet, par exemple dans une étuve ou un four, ou, de manière avantageuse pour des moules de grandes dimensions, par application locale d'une lampe infrarouge ou d'autres moyens permettant de chauffer localement, externe au moule, tels qu'une résistance chauffante ou l'air chaud. Il est également possible de prévoir que le moule soit auto-chauffant car muni de moyens de chauffages propres. Dans ce cas plusieurs moyens de chauffage peuvent être prévus comme par exemple d'équiper le moule de fils électriques chauffants ou de canalisations de fluide caloporteur, ou de souffler de l'air chaud sur le moule composite.

De préférence, l'étape de traitement thermique est choisie de manière à éviter une exposition longue du moule en matériau composite à des températures élevées. Ainsi, le traitement thermique n'excède avantageusement pas 30 minutes à une température au-delà de 260°C, et de préférence pas 15 minutes à une température au-delà de 280°C.

Après traitement thermique, les moules enduits sont prêts à l'emploi.

Les moules susceptibles d'être obtenus par le procédé selon l'invention se caractérisent par une excellente facilité de démoulage. En effet, le faible coefficient de transfert des polymères fluorés assure en général une facilité de démoulage pour au moins 20 cycles. L'utilisation des moules enduits peut se faire de manière habituelle.

Les moules revêtus ainsi obtenus sont particulièrement adaptés pour la fabrication de pièces en matériau composite. Ils peuvent être mis en oeuvre dans un quelconque des procédés utilisés, tels que le moulage par injection de résine (procédé appelé « RTM », acronyme anglais pour « resin transfer moulding »), le procédé LRI (acronyme anglais pour « liquid resin infusion »), LRI-VAP (acronyme anglais pour « liquid resin infusion - vacuum assisted processing ») ou le procédé RFI (acronyme anglais pour "resin film infusion").

Le procédé selon l'invention constitue donc un moyen rapide et aisé pour rendre anti-adhérents des moules en matériau composite. De plus, il peut s'adapter à des moules de géométrie complexe et est réalisable à grande échelle. Par ailleurs, le revêtement obtenu résiste bien aux conditions ambiantes et aux cycles de température auxquels est soumis le moule. Enfin, le revêtement est avantageusement réparable par chauffage lorsqu'il a été percé localement, après apport de matière si nécessaire.

L'invention sera mieux expliquée au regard des exemples qui suivent, donnés à titre non limitatif.

### EXEMPLES

### EXEMPLE 1

### Enduction d'un moule composite avec une couche mince de FEP, application à la barre calibrée.

Sur les surfaces intérieures d'un moule en composite fibres de carbone/époxyde de dimensions 60 x 60 mm propre et sec, deux couches fines d'une dispersion d'un copolymère de fluoroéthylène et de fluoropropylène (FEP) (Xylan^{®} 80-650 vendu par Whitford France, Pontault-Combault) ont été appliquées au moyen d'une barre calibrée permettant de gérer l'épaisseur humide déposée.

Cette épaisseur est choisie en tenant compte de l'extrait sec de la dispersion. Ici la barre utilisée est une barre de 100 µm, donnant une couche sèche après désolvatation de 30 µm. Le film final sec composé de deux couches a alors une épaisseur de 60 µm.

D'une manière générale afin de former un film continu de FEP, on procède au traitement thermique permettant la coalescence des particules déposées, en chauffant le FEP jusqu'à 265°C avec un palier de quelques minutes à cette température.

Dans le cas de l'application à la barre, chaque couche intermédiaire doit subir une désolvatation et le traitement thermique de formation du film pour pouvoir appliquer la couche suivante par dessus.

Lors du traitement thermique de la dernière couche, les différentes couches refondent et s'homogénéisent entre-elles.

Le revêtement ainsi réalisé passe le test du quadrillage selon la norme ISO 2409 pour son adhérence au moule composite. Il possède par ailleurs une très faible énergie de surface, autour de 15-16 mJ/m², propriété requise d'un revêtement anti-adhérent. Cette énergie de surface est mesurée suivant la norme ASTM 7490-08 à l'aide de 2 liquides selon le modèle de Owens-Wendt.

Sur le moule ainsi revêtu, des essais de moulage-démoulage sont réalisés.

Le test du plot collé consiste à polymériser sur la surface du moule carbone/époxyde revêtu FEP un plot de résine époxyde. Après cuisson, il s'avère qu'il n'y a aucune adhérence du plot époxyde sur le moule à matrice époxyde. Par simple inclinaison de la plaque, le plot glisse. Le résultat est meilleur qu'avec un agent démoulant classique non pérenne.

Les essais sont répétés sur les surfaces tel quelles, aux mêmes endroits. Il peut être réalisé au minimum une dizaine de démoulages sans observer d'adhérence.

Les résultats obtenus démontrent que l'application d'un copolymère FEP à titre d'agent de démoulage permet l'obtention de revêtements anti-adhérent sur des moules composites sans nécessité d'un traitement thermique à haute température.

### EXEMPLE 2

### Enduction d'un moule composite avec une couche mince de FEP, application au pistolet

Dans cet exemple, sur les surfaces intérieures d'un moule en composite fibres de carbone/époxyde de dimensions 120 x 150 mm propre et sec, ont été appliquées deux couches fines d'une dispersion d'un copolymère de fluoroéthylène et de propylène (FEP) (Xylan^{®} 80-650 vendu par Whitford France, Pontault-Combault) au moyen d'un pistolet à peinture KREMLIN fonctionnant à l'air comprimé réglé à un débit de 30 µm/sec. Ici entre les deux couches, seule une désolvatation a été réalisée. Après la deuxième couche, le revêtement a de nouveau été désolvanté.

L'épaisseur finale du revêtement obtenu sur le moule était inférieure à 100 µm.

On procède ensuite au traitement thermique permettant la coalescence des particules déposées, en plaçant le moule dans une étuve réglée pour une montée en température jusqu'à 265°C puis un palier de quelques minutes à cette température (5 à 10 minutes).

Le revêtement ainsi réalisé passe le test du quadrillage selon la norme ISO 2409 pour son adhérence au moule composite. Il possède par ailleurs une très faible énergie de surface, autour de 15-16 mJ/m², propriété requise d'un revêtement anti-adhérent. Cette énergie de surface est mesurée suivant la norme ASTM 7490-08 à l'aide de 2 liquides selon le modèle de Owens-Wendt.

Sur le moule ainsi revêtu, des essais de moulage-démoulage sont réalisés.

Ceux-ci ont lieu avec du tissu de carbone pré-imprégné de résine époxyde, nommé pré-imprégné ou prepreg, utilisé dans l'industrie. Le prepreg est polymérisé sous charge sur le moule pour simuler le procédé RFI. Après cuisson à 180 °C comme stipulé pour ce matériau, au simple retrait du poids le tissu pré-imprégné se soulève, il n'y a aucune adhérence.

Les essais sont répétés sur les surfaces tel quelles, aux mêmes endroits. Il peut être réalisé au minimum une dizaine de démoulages sans observer d'adhérence.

Les résultats obtenus démontrent que l'application d'un copolymère FEP à titre d'agent de démoulage permet l'obtention de revêtements anti-adhérent sur des moules composites sans nécessité d'un traitement thermique à haute température.

### EXEMPLE 3

### Traitement thermique par rayonnements infra-rouges

Après dépôt de FEP comme dans l'exemple 1, des essais thermiques de formation du film de FEP on été réalisés à l'épiradiateur par rayonnement infra-rouge

L'épiradiateur est constitué d'une résistance chauffante de 500 W placée derrière un disque en silice (quartz) de 100 mm de diamètre. Il libère une énergie infra-rouge fournissant une chaleur rayonnante. Dans notre cas il est placé à une distance choisie pour obtenir 260-270°C de température à la surface du composite (étalonnage préalable sur composite nu). Un relevé de température par un thermomètre infra-rouge à distance a lieu.

Ce mode de chauffe permet un chauffage surfacique et évite de placer l'ensemble du moule à 265°C. La température surfacique de 265°C est maintenue 5 à 10 minutes, le temps nécessaire à la formation du film.

L'adhérence de la couche FEP au support atteinte est la même que pour le traitement thermique en étuve, à savoir que le revêtement ainsi réalisé passe le test du quadrillage selon la norme ISO 2409 pour son adhérence au moule composite.

### EXEMPLE 4

### Aptitude à la réparation

Sur une usure locale de la surface, produite volontairement au moyen d'un couteau, une retouche de polymère fluoré a été réalisée au pinceau.

Puis un chauffage local de la zone réparée a été effectué à l'épiradiateur, comme décrit à l'exemple 3 ci-dessus.

Le revêtement ainsi réparé redevient ainsi continu et produit des résultats satisfaisants en termes d'anti-adhérence.

## Revendications

1. Procédé pour rendre anti-adhérent un moule en matériau composite destiné à la fabrication de pièces en matériau composite, comprenant les étapes de :
(i) fourniture d'un moule en matériau composite comprenant une résine époxyde ;
(ii) application d'une poudre de polymère fluoré présentant une température minimale de filmification inférieure à 300°C et une tenue en température supérieure à 200 °C sur les parois du moule afin de former une couche; et
(iii) chauffage de la couche obtenue à une température comprise entre 260°C et 300 °C afin de former un film continu,
ce par quoi on obtient un moule en matériau composite dont les parois sont munies d'un revêtement anti-adhérent.

2. Procédé selon la revendication 1, dans lequel le moule en matériau composite comprend des fibres de carbone.

3. Procédé selon l'une des revendications 1 ou 2, dans lequel le polymère fluoré comprend un polymère ou copolymère de fluoroalkylène.

4. Procédé selon l'une des revendications 1 à 3, dans lequel le polymère fluoré comprend un copolymère de fluoroéthylène et de fluoropropylène (FEP).

5. Procédé selon la revendication 4, dans lequel la poudre de copolymère de fluoroéthylène et de fluoropropylène (FEP) est appliquée sous forme de dispersion aqueuse.

6. Procédé selon l'une des revendications 1 à 5, dans lequel l'étape (iii) est réalisée dans une étuve.

7. Procédé selon l'une des revendications 1 à 5, dans lequel l'étape (iii) est réalisée au moyen de rayonnement infra-rouge.

8. Procédé selon l'une des revendications 1 à 7, dans lequel revêtement anti-adhérent a une épaisseur compris entre 10 et 150 µm.

9. Moule en matériau composite obtenu par le procédé selon l'une des revendications 1 à 8.

10. Moule selon la revendication 9, destiné à la fabrication de pièces en matériau composite.

## Patentansprüche

1. Verfahren zur Schaffung einer Form aus Verbundmaterial, die anti-haftend ist, für die Herstellung von Bauteilen aus Verbundmaterial, wobei das Verfahren die Schritte aufweist:
(i) Bereitstellen einer Form aus Verbundmaterial aufweisend ein Epoxydharz,
(ii) Aufbringen eines Fluorpolymerpulvers auf den Wänden der Form, das eine Mindestfilmbindungstemperatur kleiner als 300 °C und eine Temperaturbeständigkeit größer als 200 °C aufweist, um eine Schicht zu bilden, und
(iii) Erhitzen der erhaltenen Schicht auf eine Temperatur zwischen 260 °C und 300 °C, so dass eine kontinuierliche Schicht gebildet wird,
wodurch eine Form aus Verbundmaterial erhalten wird, deren Wände mit einer Antihaftbeschichtung vorgesehen sind.

2. Verfahren nach Anspruch 1, wobei die Form aus Verbundmaterial Karbonfasern aufweist.

3. Verfahren nach einem der Ansprüche 1 oder 2, wobei das Fluorpolymer ein Polymer oder Copolymer von Fluoroalkylen aufweist.

4. Verfahren nach einem der Ansprüche 1 bis 3, wobei das Fluorpolymer ein Copolymer von Fluorethylen und Fluoropropylen (FEP) aufweist.

5. Verfahren nach Anspruch 4, wobei das Pulver aus Copolymer von Fluorethylen und Fluoropropylen (FEP) in Form von wässriger Dispersion aufgebracht wird.

6. Verfahren nach einem der Ansprüche 1 bis 5, wobei der Schritt (iii) in einem Trockenofen durchgeführt wird.

7. Verfahren nach einem der Ansprüche 1 bis 5, wobei der Schritt (iii) mittels einer Infrarotstrahlung durchgeführt wird.

8. Verfahren nach einem der Ansprüche 1 bis 7, wobei die Antihaftbeschichtung eine Dicke zwischen 10 bis 150 µm aufweist.

9. Form aus Verbundmaterial hergestellt mittels des Verfahrens nach einem der Ansprüche 1 bis 8.

10. Form nach Anspruch 9 für die Herstellung von Bauteilen aus Verbundmaterial.

## Claims

1. A method for rendering nonstick a mold made of a composite material intended for the manufacture of parts made of composite material, comprising the steps of :
(i) providing a mold made of composite material comprising an epoxy resin;
(ii) applying a powder of fluorinated polymer, having a minimum film-forming temperature lower than 300°C and heat resistance at temperatures higher than 200°C, onto the walls of the mold to form a layer; and
(iii) heating the layer obtained to a temperature of between 260°C and 300°C to form a continuous film;
whereby a mold made of composite material is obtained, the walls of which are provided with a nonstick coating.

2. The method according to claim 1 wherein the mold made of composite material comprises carbon fibers.

3. The method according to one of claims 1 or 2 wherein the fluorinated polymer comprises a polymer or copolymer of fluoroalkylene.

4. The method according to one of claims 1 to 3 wherein the fluorinated polymer comprises a copolymer of fluoroethylene and fluoropropylene (FEP).

5. The method according to claim 4 wherein the powder of fluoroethylene and fluoropropylene copolymer (FEP) is applied in the form of an aqueous dispersion.

6. The method according to one of claims 1 to 5 wherein step (iii) is performed in an oven.

7. The method according to one of claims 1 to 5 wherein step (iii) is performed using infrared radiation.

8. The method according to one of claims 1 to 7 wherein the nonstick coating has a thickness of between 10 and 150 µm.

9. A mold in composite material obtained with the method according to one of claims 1 to 8.

10. The mold according to claim 9 intended for the manufacture of parts made of composite material.
